# EUROPEAN PATENT APPLICATION

(11) **EP 4 541 945 A1**
(43) Date of publication of application: **23.04.2025**
(21) Application number: 23306816.2
(22) Date of filing: 17.10.2023
(51) Int. Cl.: C25B 15/08, C01B 3/00, H01M 8/0656

(54) **DEVICE FOR ELECTROCHEMICAL REVERSIBLE DIHYDROGEN STORAGE**

(71) Applicant: Centre National de la Recherche Scientifique, 75016 Paris (FR); Université de Lorraine, 54000 Nancy (FR)
(72) Inventor: ETIENNE, Mathieu, 54500 VANDOEUVRE-Lès-NANCY (FR)
(74) Representative: IPAZ

(57) **Abstract**

The invention relates to Device for electrochemical reversible dihydrogen storage (1), said device comprising: a sealed chamber (2) intended to receive an electrolytic media (3) and gaseous dihydrogen (4), connection means (5) suitable for connecting the seal chamber to a gas circuit (6) and at least one first electrode (7), and at least one second electrode (8), arranged within the sealed chamber. The at least one second electrode is suitable to oxidize dissolved gaseous dihydrogen, in the electrolytic media, and form protons and to reduce protons and form gaseous dihydrogen according to formula 1: *H*₂ ↔ 2*H*⁺ + 2*e*⁻, formula 1. The at least one first electrode comprises at least one redox couple M^{y}/M^{x}, insoluble in the electrolytic media, said at least one redox couple being arranged to exhibit at least two oxidation states and being suitable to be reduced from an oxidized state M^{y} to a reduced state M^{x}, and conversely, according to formula 2: *M^{y}* + *pe⁻* ↔ *M^{x},* formula 2, wherein x and y are oxidation number. An absolute potential difference |ΔE| between a redox potential of the couple H⁺/H₂, for a predetermined electrolytic media and a predetermined pressure range of gaseous dihydrogen, and a redox potential of the at least one couple M^{y}/M^{x} is lower than or equal to 0.6 V.

## Description

### Field of the invention

The present invention relates to the field of dihydrogen storage.

In particular, the present invention deals with a device and a method for long term and reversible dihydrogen storage.

### Background to the invention

Replacement of fossil fuels by renewable sources of energies (e.g. solar, wind or hydraulic) requires the massive development of storage means of electrical energy produced intermittently. This storage is mandatory due to significant fluctuations in electricity production and the daily shift between peak production and peak consumption. Finally, especially for photovoltaic production, there is a seasonal gap between the maximum electricity production in summer and the maximum electrical energy needs for heating in winter. Thus, there is a need for energy storage means able to store energy for hours as well as for months.

One major option relies in a significant increase of electrochemical energy storage. The market is currently dominated by Li-ion battery technologies. Other technologies, such as redox flow batteries or older technologies such as Ni-Fe, iron-oxygen or Ni-hydrogen batteries are possible options. However, the current electrochemical energy storage technologies are only suitable for relatively short storage time and only allows temporary stabilization of the electrical network frequency or daily shift between maximum productions to maximum consumptions, but cannot be applied to seasonal storage because of technical limitations such as self-discharge phenomena and also due to their cost per kwh stored.

The seasonal storage of renewable energy for a small new detached house of 100 m² that meets the thermal insulation standards using a Li-ion technology will reach several thousands of euros, which is prohibitive. Moreover, the volume occupied by Li-ion batteries would be several cubic meters minimum. Moreover, such a concentration of batteries is a major risk in the event of a fire. An alternative technology, also considered safer, is the redox flow battery. Nevertheless, the energy density is lower and the volume needed for the battery would be several tens of cubic meter. In addition, the current massive development of electrochemical storage of electrical energy, for mobile or stationary applications, could soon affect the availability of the mineral resources used for their fabrication and lead to increase the costs of these technological solutions and to raw material shortages.

Beyond daily or weekly storage, a major problem remains the seasonal storage of renewable energies for several months. In principle, this long term storage can be provided by dihydrogen, but one main issue is that the dihydrogen molecule is relatively difficult and expensive to store, not to mention security issues of dihydrogen storage under very high pressure.

Regarding dihydrogen storage, it is possible to store dihydrogen, in pure form by compression of the gas or by liquefaction, by adsorption on porous materials, by formation of metal hydrides, or in the form of liquid organic hydrogen carrier. Each of these technologies exhibits advantages and disadvantages but none of these technologies is currently deployed on a large scale for the storage of renewable energies.

An alternative approach particularly studied for the past years relies on the interconversion of solid metal oxides to solid metal. For example, metal is produced when exposing the metal oxide to dihydrogen and dihydrogen gas is produced by exposing a metal to an aqueous solution, where the aqueous solution can be in some examples under supercritical conditions or is at a temperature higher than 200° and at a pressure of at least the saturated vapor pressure of water. Iron combustion in air can also be used for releasing the stored energy but with the limit that it can produce Nitrogen Oxides. Another typical approach to store renewable energy is using the electrochemical reduction of zinc ions to zinc metal on one electrode, coupled to water oxidation on a second electrode. In a separated process, zinc metal is chemically converted to zinc ions and hydrogen upon demand. All these alternative approaches have the limit not to be suitable for their direct application at individual houses or small communities but rather at larger, industrial scale, facilities.

Hence, there is a strong need to store dihydrogen, in particular dihydrogen produced by electrolysis.

### Summary of the invention

An object of the invention is to provide a device and a method for electrochemical reversible dihydrogen storage which :
- enables stable storage of dihydrogen,
- is risk-free,
- enables long term storage, for instance several tens of days or several months,
- is low cost,
- is suitable, but not limited to, for neighborhood storage or individual storage, for single-family home or small communities for instance,
- rely on abundant elements,
- enables storing and releasing dihydrogen on demand,
- is implemented at ambient or near ambient temperature, and/or
- is implemented at atmospheric pressures or near atmospheric pressure.

To this end, there is provided a device for electrochemical reversible dihydrogen storage, said device. The device comprises:
- a sealed chamber intended to receive an electrolytic media and gaseous dihydrogen,
- connection means suitable for connecting the seal chamber to a gas circuit,
- at least one first electrode and at least one second electrode; the at least one first electrode and the at least one second electrode being arranged within the sealed chamber.

The at least one second electrode is suitable to oxidize dissolved gaseous dihydrogen, in the electrolytic media, and form protons or hydrogen ions or hydronium ions and to reduce protons or hydrogen ions or hydronium ions and form gaseous dihydrogen according to formula 1:

*H*₂ ↔ 2*H⁺* + 2*e*⁻, formula 1.

The at least one first electrode comprises at least one redox couple M^{y}/M^{x}, insoluble in the electrolytic media, said at least one redox couple being arranged to exhibit at least two oxidation states and being suitable to be reduced from an oxidized state M^{y} to a reduced state M^{x}, and conversely, that is to be oxidized from the reduced state M^{x} to the oxidized state M^{y}, according to formula 2: *M^{y} + pe⁻* ↔ *M^{x}* formula 2, wherein x and y are oxidation number.

An absolute potential difference, said |ΔE|, between a redox potential of the couple H⁺/H₂, for a predetermined electrolytic media and a predetermined pressure range of gaseous dihydrogen, and a redox potential of the at least one couple M^{Y}/M^{x} is lower than or equal to 0.6 V.

Preferably, the electrolytic media is not comprised nor part of the device. Preferably, the at least one first electrode and the at least one second electrode of the device are intended to be brought in contact with the electrolytic media.

The electrolytic media may be part of the device.

Preferably, |ΔE| = E(H⁺/H₂)-E(M^{y}/M^{x}) where E(M^{y}/M^{x}) is the redox potential of the at least one couple M^{y}/M^{x}, in volts, and E(H⁺/H₂) is the redox potential of the couple H⁺/H₂, for a predetermined electrolytic media and a predetermined pressure range of gaseous dihydrogen, in volts.

In the present application, the term dihydrogen or gaseous dihydrogen means or refers to gaseous dihydrogen Hz.

Preferably, the gaseous dihydrogen oxidized at the at least one second electrode is dissolved in the electrolytic media. Preferably, in the present application, it is understood by "oxidation" or "reduction" of a compound: an electrochemical oxidation or an electrochemical reduction of the compound in the electrolytic media.

Preferably, the pressure of the electrolytic media and/or of the gaseous dihydrogen (in the sealed chamber) is equal to the pressure in the sealed chamber.

Preferably, otherwise specified differently, the potential or redox potential is expressed in volts (V).

Preferably, the at least one first electrode and the at least one second electrode are intended to be in contact and/or immersed in the electrolytic media. In other words, when the device is in operation, the at least one first electrode and the at least one second electrode are in contact and/or immersed in the electrolytic media.

Preferably, the gas circuit is not part of the device. Preferably, the gas circuit is an external gas circuit with which the connection means are intended to be connected.

Preferably, the at least one redox couple M^{y}/M^{x} is insoluble in the predetermined electrolytic media.

Preferably, at least two of the redox form, preferably each of the redox form, of the at least one redox couple M^{y}/M^{x} is electroactive.

Preferably, the at least one redox couple M^{y}/M^{x} is in solid form.

Preferably, the at least one redox couple M^{y}/M^{x} is in contact and/or attached and/or immobilized and/or grafted to the at least one first electrode. Preferably, the at least one redox couple M^{y}/M^{x} is not soluble in the electrolytic media.

Preferably, a part of the total internal volume of the sealed chamber is intended to be occupied by the electrolytic media and the rest of the total internal volume of the sealed chamber is intended to be occupied by gaseous dihydrogen.

Preferably, the device according to the invention is not a battery and/or a fuel cell and/or an electrolyzer for water splitting and is not intended and/or is not suitable and/or is not arranged to operate as a battery and/or a fuel cell and/or an electrolyzer for water splitting.

Preferably, according to the present description, the gaseous dihydrogen which reacts with the at least one second electrode is dissolved into the electrolytic media.

Preferably, E(M^{y}/M^{x}) is comprised between -0.6 V and +0.6 V versus reversible hydrogen electrode. E⁰(H⁺/H₂) is equal to 0 V versus standard hydrogen electrode for a pH of the electrolytic aqueous solution equal to 0 and an absolute pressure equal to 1.10⁵ Pascals.

Preferably, |ΔE| is lower than or equal to 0.55 V, more preferably to 0.50 V, even more preferably to 0.45 V, most preferably to 0.40 V, even most preferably to 0.35 V, particularly advantageously to 0.30 V, more particularly advantageously to 0.25 V, even more particularly advantageously to 0.20 V, in a particularly preferred manner to 0.15 V, in a more particularly preferred manner to 0.10 V, in an even more particularly preferred manner to 0.05 V and in the most preferred manner equal to 0 V.

When the electrolytic media is an aqueous solution, depending on the pH and the gaseous dihydrogen pressure, redox reactions taking place at the second electrode, i.e. oxidation of gaseous dihydrogen and reduction of water, can also be expressed as:

*H*₂ (*gas*) + 2*0H⁻*(*liq*) ↔ 2*H*₂0(*liq*) + 2*e*⁻, formula 3.

Thus, preferably, the at least one second electrode is suitable to, in aqueous media, oxidize gaseous dihydrogen and form water and to reduce water and form gaseous dihydrogen and hydroxide according to formula 3.

The at least one first electrode may comprise several redox couples, insoluble in water: M^{y}/M^{x}, M^{z}/M^{y}, M^{a}/M^{z}, etc, with a>z>y>x.

The several redox couples may consist or may be made of a single chemical element or material or may consist or may be made of different chemical elements or materials.

The at least one first electrode may comprise or may be made of several materials or chemical elements. The at least one first electrode may comprise or may be made of the at least one redox couple M^{y}/M^{x} coated on a conductive material.

The device may comprise several at least one first electrode and/or several at least one second electrode connected in parallel.

The electrolytic media may be a gel or a solid. Preferably, the electrolytic media is a liquid.

Preferably, the electrolytic media is a proton acceptor. Preferably, the electrolytic media is capable of solvating protons and/or accepting protons.

Thus, preferably, it can be understood that the at least one second electrode is suitable to oxidize dissolved gaseous dihydrogen, in the electrolytic media, and form protons that are solvated/accepted by the electrolytic media and to reduce the electrolytic media to form gaseous dihydrogen according to formula 1.

Preferably, the sealed chamber does not comprise gaseous dioxygen.

Preferably, gaseous dioxygen or dissolved gaseous dioxygen is not involved and/or does not participate in the storage and/or the release of dihydrogen according to the invention. Preferably, gaseous dioxygen or dissolved gaseous dioxygen is not involved and/or does not participate in the electrochemical and/or in the redox reactions of the device according to the invention.

Preferably, the electrolytic media comprises or consists in a protic media.

The protic media may comprise or consist in an alcohol, a carboxylic acid, an aminated compound, ammonia, a sulfonated compound, a phosphonated copound, a boronated compound or a mixture thereof.

The protic media may comprise or consist of a protic Ionic Liquid.

The protic media may consist of a deep eutectic solvent.

Preferably, the electrolytic media comprises or consists in water.

The electrolytic media may not comprise water, or may be different from water, and the redox potential of the at least one redox couple M^{y}/M^{x} is higher than the reduction potential of the electrolytic media.

The electrolytic media may not comprise water, or may be different from water, and the redox potential of the at least one redox couple M^{y}/M^{x} is lower than the oxidation potential of the electrolytic media.

Preferably, the electrolytic media comprises or consists in water and the redox potential of the at least one redox couple M^{y}/M^{x} is lower than the oxidation potential of water.

Preferably, the electrolytic media comprises or consists in water and the redox potential of the at least one redox couple M^{y}/M^{x} is higher, equal or lower than the reduction potential of water.

Preferably, the electrolytic media comprises one or more additives to limit or inhibit spontaneous reaction of:
- the at least one redox couple M^{y}/M^{x} with the electrolytic media, and/or
- the gaseous dihydrogen with the at least one redox couple M^{y}/M^{x}.

Preferably, the one or more additives are arranged or suitable to prevent the dissolution of the at least one redox couple M^{y}/M^{x} in the electrolytic media. Thus, preferably, the one or more additives enable or promote the at least one redox couple M^{y}/M^{x} to remain immobilized or attached on the at least one first electrode.

Preferably, the electrolytic media intended to be received in the sealed chamber is a liquid and:
- the device comprises means arranged to remove and reintroduce the electrolytic media from the sealed chamber, and/or
- the at least one first electrode, preferably containing the at least one couple M^{y}/M^{x} is in its reduced state M^{x}, is arranged to be removed from and to be reintroduced in the electrolyte media within the sealed chamber.

Preferably, the means are arranged to remove or pump the electrolytic media from the sealed chamber or to push the electrolytic media out the sealed chamber and, preferably, to refill the electrolytic media within the sealed chamber or put back the electrolytic media in contact within the electrodes.

Preferably, the at least one first electrode is arranged to be removed or taken out of the electrolyte, more preferably to limit or avoid spontaneous oxidation of the reduced form M^{x} of the at least one redox couple M^{y}/M^{x}.

Preferably, the electrolytic media is removed from the sealed chamber and/or the at least one first electrode is removed from the electrolyte media after the gaseous dihydrogen has been stored at or in the first electrode, that is, when the at least one couple M^{y}/M^{x} is in its reduced state M^{x}.

Preferably, the electrolytic media is put back in contact with the electrodes in the sealed chamber, that is to say the sealed chamber is refilled with the electrolytic media when gaseous dihydrogen has to be released from the device.

Preferably, the at least one first electrode is put back in contact with the electrolytic media in the sealed chamber, that is to say the at least one first electrode is placed back in the electrolyte in the sealed chamber, more preferably the at least one first electrode is moved from the gaseous media into the electrolytic media in the sealed chamber, when gaseous dihydrogen has to be released from the device.

Removing the electrolytic media from the sealed chamber and/or removing the at least one first electrode from the electrolyte media are ways to prevent or avoid spontaneous reaction of the at least one redox couple M^{y}/M^{x} with the electrolytic media.

Preferably, the at least one redox couple M^{y}/M^{x} comprises:
- a metal such as Iron, Zinc, Tungsten, Cadmium, Copper, Bismuth, Antimony, Lead, a Metal hydride such as LaNis,
- an insoluble organic molecule such as Anthraquinone and/or an insoluble redox polymer such as Polyaniline.

Preferably, the at least one second electrode comprises a catalyst or a combination of catalysts suitable to oxidize dissolved gaseous dihydrogen, in the electrolytic media, and form protons and to reduce protons and form gaseous dihydrogen according to formula 1.

Preferably, the catalyst or a combination of catalysts is active for both hydrogen evolution reaction and hydrogen oxidation reaction.

The at least one second electrode may be made of or may comprise several catalysts providing activities for both hydrogen evolution reaction and hydrogen oxidation reaction.

The catalyst may be or may comprise, for instance, Noble Metals, for example Platinum (Pt), Palladium (Pd), Gold (Au), Rhodium (Rh), Iridium (Ir), Ruthenium (Ru). Preferably, the catalyst may be or may comprise, for instance, bimetallic and multimetallic alloys, for example PtCo, PtNi, PtIr, PtRu. Preferably, the catalyst may be or may comprise, for instance, transition Metals, for example Nickel, Nickel-molybdenum (NiMo) alloys, Nickel-boron (NiB). Preferably, the catalyst may be or may comprise, for instance, Carbon-Based Catalysts with Metal/Non-Metal Doping, for example, Pt or Pd nanoparticles supported on carbon black or carbon nanotubes, Nitrogen-doped carbon materials. Preferably, the catalyst may be or may comprise, for instance, Polymer-Derived Catalysts, for example pyrolyzed metal-polymer complexes with metals like Pt or Ni. Preferably, the catalyst may be or may comprise, for instance, Metal Phosphides, Metal Nitrides, Metal carbides, Metal sulfides, for example Nickel phosphide (Ni₂P), Cobalt phosphide (CoP), ruthenium phosphide, ruthenium sulfides, ruthenium carbide, Tungsten carbide (WC), ruthenium nitride, or ruthenium phosphide-sulfide.

Preferably, the device further comprises supply means arranged to inject gaseous dihydrogen in or remove gaseous dihydrogen, through the gas circuit, from the seal chamber. Preferably, the device and/or the supply means is arranged so that the pressure of gaseous dihydrogen within the sealed chamber is maintained in the predetermined pressure range.

The device may further comprise two current collectors respectively connected to the at least one first electrode and the at least one second electrode.

The device may further comprise a current generator arranged for circulating a current between the at least one first electrode and the at least one second electrode.

Preferably, the current generator is arranged to control and/or stop current injection through the at least one first electrode and through the at least one second electrode according to a potential difference measured, by a means dedicated to measure potential differences, between the at least one first electrode and the at least one second electrode. The current generator may be arranged to stop current injection through the at least one first electrode and through the at least one second electrode when a predetermined potential difference or a potential difference threshold, between the at least one first electrode and the at least one second electrode, is reached.

The device may further comprise means for monitoring and/or controlling the pressure of gaseous dihydrogen within the sealed chamber.

The means for monitoring and/or controlling the pressure may comprise or be made of a control unit and/or a command unit and/or a treatment unit. The control unit and/or a command unit and/or a treatment unit may be arranged and/or configured to and/or programmed to command the supply means and/or the current generator.

According to the invention, there is also provided a method, said method, for electrochemical reversible dihydrogen storage in the device according to the invention. The method comprises the step of storing gaseous dihydrogen in the device. The storing step consisting in:
- supplying gaseous dihydrogen, by supply means, until it reaches a predetermined pressure range, in a sealed chamber of the device, said device comprises at least one first electrode and at least one second electrode and comprises an electrolytic media; gaseous dihydrogen being injected through connection means of the sealed chamber connecting the seal chamber to a gas circuit, preferably to an external gas circuit,
- reducing from an oxidized state M^{y} to a reduced state M^{x} of at least one redox couple M^{y}/M^{x}, which is insoluble in the electrolytic media, of the at least one first electrode by injecting a current, by a current generator, through the at least one first electrode and oxidizing dissolved gaseous dihydrogen to form protons or hydrogen ions or hydronium ions at the least one second electrode.

An absolute potential difference |ΔE| between the redox potential of the couple H⁺/H₂, for a predetermined electrolytic media and a predetermined pressure range of gaseous dihydrogen, and the redox potential of the at least one couple M^{y}/M^{x} is lower than or equal to 0.6 V.

Preferably, a current density injected in the at least one first electrode and in the at least one second electrode are low compared to current density used in fuel cells or electrolyzers for water splitting. For instance, current densities injected in the at least one first electrode and in the at least one second electrode are preferably lower than or equal to 100 mA per cm² of electrode, more preferably lower than 10 mA/cm² and even more preferably lower than 1 mA/cm².

Preferably, the charging/discharging rate C is low compared to charging/discharging rate in batteries where C is the capacity of the device. For instance, charging/discharging rates are preferably lower than or equal to 0.05 C, more preferably lower than 0.01 C and even more preferably lower than 0.005 C.

Preferably, the method further comprises a step of releasing gaseous dihydrogen from the device. The releasing step consisting in:
- oxidizing from the reduced state M^{x} to the oxidized state M^{y} the at least one redox couple M^{y}/M^{x} at the at least one first electrode and reducing protons, by injecting a current through the at least one second electrode, to form gaseous dihydrogen at the least one second electrode,
- venting or removing the gaseous dihydrogen out of the sealed chamber through the connection means.

Preferably, the method further comprises the step consisting in monitoring and/or controlling, by means for monitoring and/or controlling the pressure of gaseous dihydrogen within the sealed chamber, the gaseous dihydrogen pressure at a gauge pressure lower or equal to 1.10⁶ Pascals at ambient temperature.

Preferably, the gaseous dihydrogen pressure is monitored and controlled at a gauge pressure comprised between 2.10³ and 8.10⁵ Pascals at ambient temperature.

Preferably, the device according to the invention is arranged, more preferably specifically arranged, to implement the method according to the invention. Thus, any feature of the device according to the invention may be transposed and/or integrated in the method according to the invention and vice versa.

### Brief description of the drawings

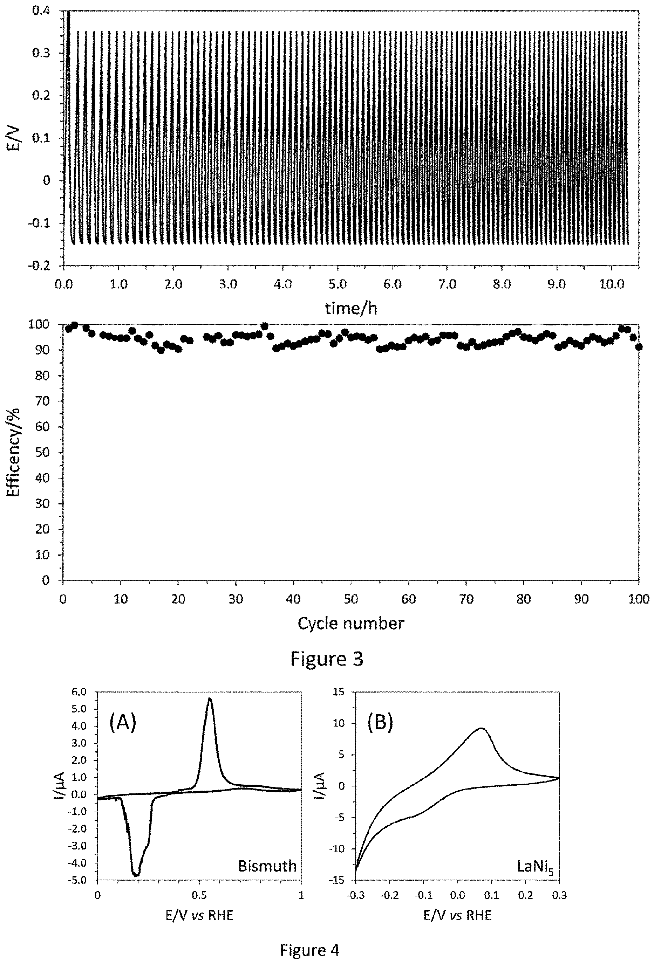

Further inventive objects, features and advantages will become apparent from the following detailed description of several embodiments of the invention with references to the drawings, in which:

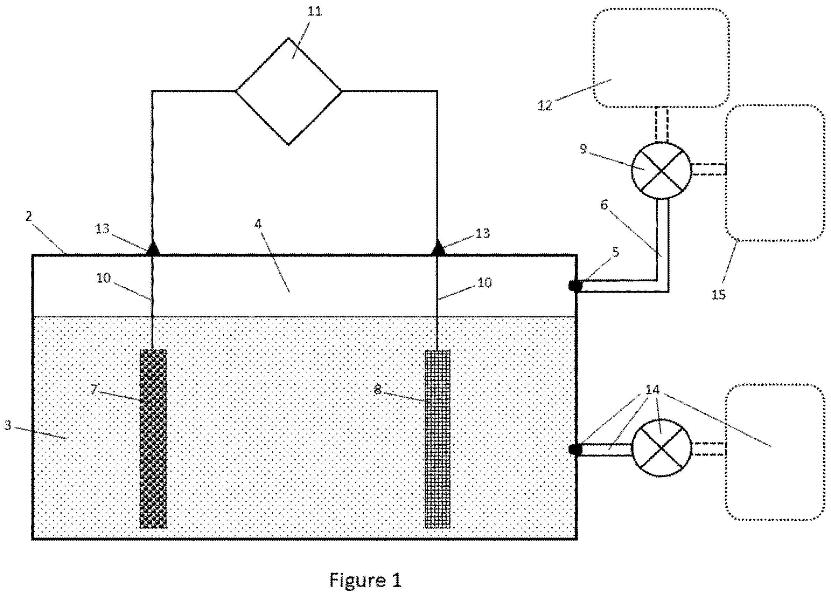

- FIGURE 1 is schematic side view of an embodiment of the device according to the invention,

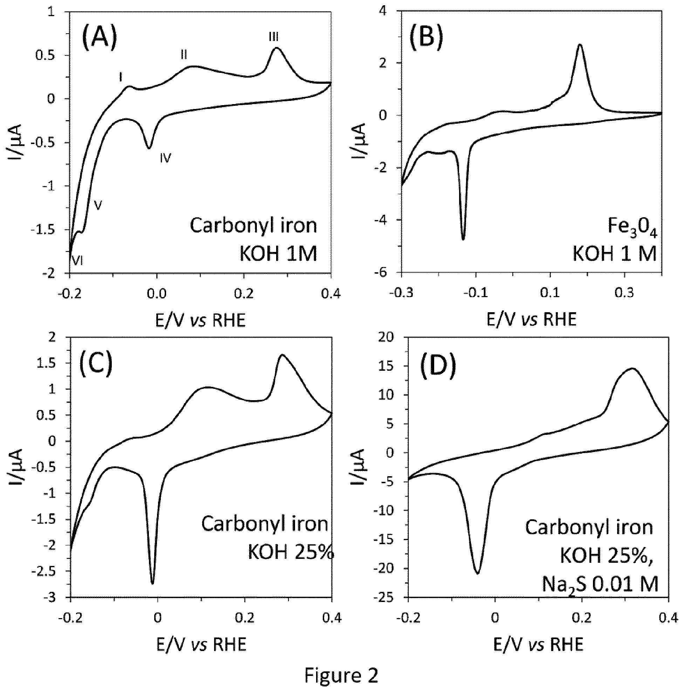

- FIGURES 2A, 2C and 2D illustrate the cyclic voltamperograms obtained with the first electrode comprising carbonyl iron as redox couple M^{y}/M^{x} and FIGURE 2B illustrates the cyclic voltamperogram obtained with the first electrode comprising Fe₃O₄ as redox couple M^{y}/M^{x}; the experiments are carried out in an aqueous electrolytic media containing KOH 1M for FIGURES 2A and 2B, KOH 25%, in volume, for FIGURE 2C and KOH 25%, in volume, and Na₂S 0.01M for FIGURE 2D; the potential scan rate is 1 mV/s and the experiment is carried out under H₂ atmosphere,
- top graph of FIGURE 3 depicts 100 cycles of charge/discharge of the device according to the first embodiment wherein the first electrode comprises carbonyl iron as redox couple M^{y}/M^{x}, charging and discharging are carried out at 0.1 µA in an aqueous electrolytic media containing KOH 1M under H₂ atmosphere; bottom graph of FIGURE 3 depicts the Coulombic efficiency of the device calculated from the charge/discharge data of the top graph of FIGURE 3,
- FIGURE 4A illustrates the cyclic voltamperogram obtained with the first electrode comprising Bismuth as redox couple M^{y}/M^{x} and FIGURE 4B illustrates the cyclic voltamperogram obtained with the first electrode comprising LaNi₅ as redox couple M^{y}/M^{x}; the experiments are carried out in an aqueous electrolytic media containing KOH 1M, the potential scan rate is 1 mV/s and the experiment is carried out under Hz atmosphere,

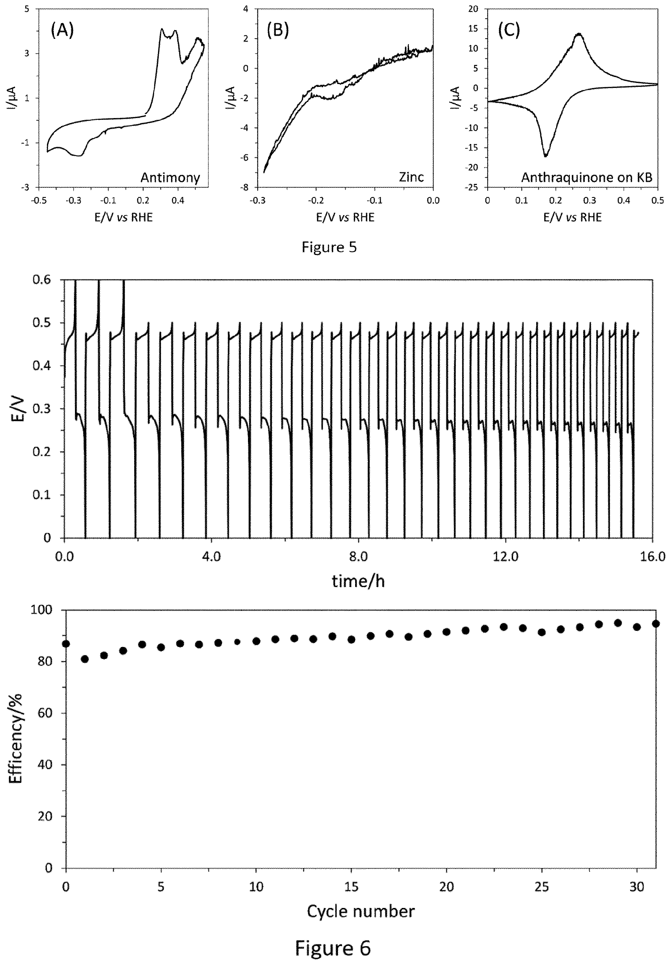

- FIGURES 5A, 5B and 5C illustrate the cyclic voltamperograms obtained with the first electrode respectively comprising Antimony, Zinc and Anthraquinone as redox couple M^{y}/M^{x}; the experiments are carried out in an aqueous electrolytic media containing KOH 1M, the potential scan rate is 1 mV/s and the experiment is carried out under H₂ atmosphere,
- top graph of FIGURE 6 depicts 100 cycles of charge/discharge of the device according to the first embodiment wherein the first electrode comprises Bismuth as redox couple M^{y}/M^{x}, charging and discharging are carried out at 0.1 µA in an aqueous electrolytic media containing KOH 1M under H₂ atmosphere; bottom graph of FIGURE 6 depicts the Coulombic efficiency of the device calculated from the charge/discharge data of the top graph of FIGURE 6,

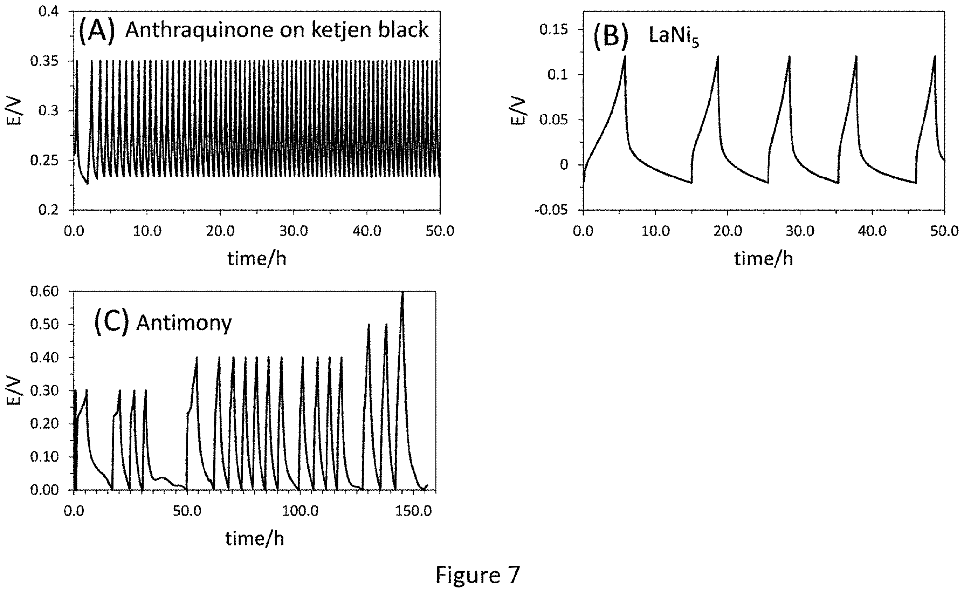

- FIGURES 7A, 7B and 7C illustrate cycles of charge/discharge of the device according to the first embodiment wherein the first electrode respectively comprises Anthraquinone, LaNi₅ and Antimony as redox couple M^{y}/M^{x} and wherein charging and discharging are respectively carried out at 0.5 µA, 5 µA and 0.5 µA in an aqueous electrolytic media containing KOH 1M under H₂ atmosphere,

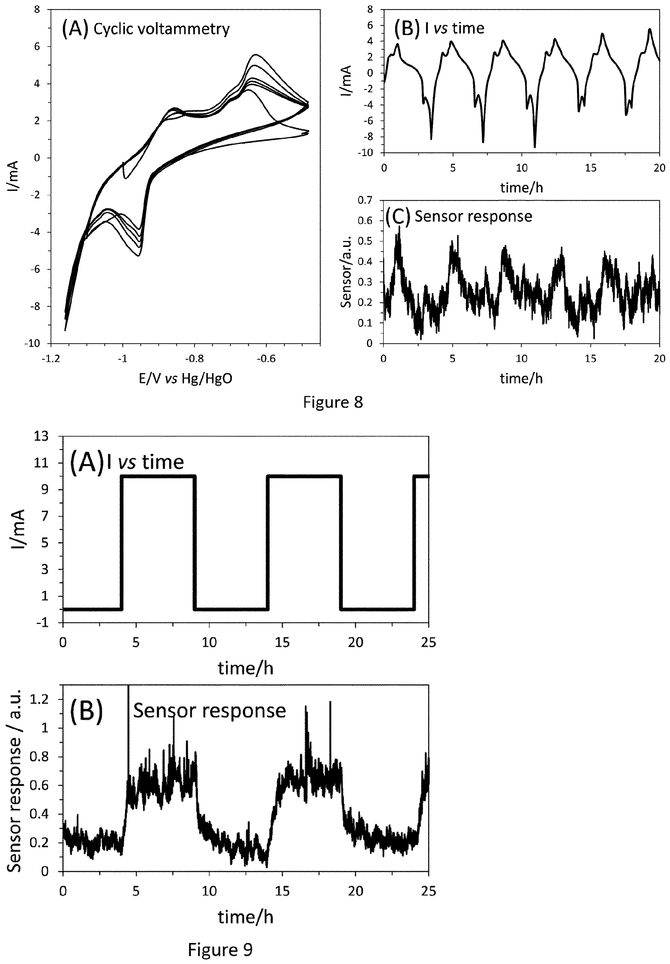

- FIGURE 8A illustrates the cyclic voltamperogram obtained with the first electrode respectively comprising carbonyl iron as redox couple M^{y}/M^{x}; the cyclic voltammetry is carried out in an aqueous electrolytic media containing KOH 1M, the potential scan rate is 0.1 mV/s and the experiment is carried out under a continuous flow of N₂ injected in the sealed chamber, FIGURE 8B is plotted from the cyclic voltamperogram depicted FIGURE 8A and illustrates the current measured over time and FIGURE 8C illustrates the response of the online H₂ sensor during the cyclic voltammetry cycles depicted FIGURE 8A,
- top graph of FIGURE 9 depicts galvanostatic cycles obtained with the first electrode respectively comprising carbonyl iron as redox couple M^{y}/M^{x} carried out in an aqueous electrolytic media containing KOH 1M under a continuous flow of N₂ injected in the sealed chamber, bottom graph of FIGURE 9 illustrates the response of the online H₂ sensor during the galvanostatic cycles depicted on the top graph of FIGURE 9.

### Detailed description of embodiments of the invention

The embodiments hereinafter described are not restrictive; other embodiments comprising a selection of features described hereinafter may be considered. A selection may comprise features isolated from a set of features (even if this selection is isolated among a sentence comprising other features thereof), if the selection is sufficient to confer a technical advantage or to distinguish the invention form the state of the art. This selection comprises at least a feature, preferably described by its technical function without structural features, or with a part of structural details if this part is sufficient to confer a technical advantage or to distinguish the invention from the state of the art on its own.

In reference to FIGURE 1, it is described an embodiment of a device for electrochemical reversible dihydrogen storage 1, said device 1, according to the invention. The device 1 comprises a sealed chamber 2 intended to receive an electrolytic media 3 and gaseous dihydrogen 4. The sealed chamber 2 is hermetic to gases and liquids. The sealed chamber 2 is arranged to withstand a gauge pressure of 1.10⁷ Pascals, preferably 5.10⁶ Pascals or even less. The method for electrochemical reversible dihydrogen storage, said method, according to the invention does not require high pressure of gaseous dihydrogen 4 within the sealed chamber 2. Thus, the device 1 may be placed close to dwellings. The gaseous dihydrogen 4 pressure within the sealed chamber 2 must be higher than atmospheric pressure to prevent atmospheric gases, and in particular dioxygen, diffusion within the sealed chamber 2, and in particular inside the electrolytic media 3. Indeed, presence of gaseous dioxygen has to be avoided in the device 1, and in particular in the sealed chamber 2. Typically, a gauge pressure of 2.10³ Pascals or more within the sealed chamber 2 will be sufficient to avoid atmospheric gases diffusion inside the sealed chamber 2.

The device 1 further comprises at least one first electrode 7, and at least one second electrode 8, arranged within the sealed chamber 2. The device 1 further comprises one second electrode 8 and one first electrode 7 according to the non-limiting embodiment. Electrode 8 is suitable to, in the electrolytic media 3, oxidize dissolved gaseous dihydrogen and form protons and to reduce protons and form gaseous dihydrogen according to formula 1:

*H*₂ ↔ 2*H⁺* + 2*e*⁻, formula 1.

Electrode 7 comprises at least one redox couple M^{y}/M^{x}, insoluble in the electrolytic media 3. The at least one redox couple M^{y}/M^{x} is arranged to exhibit at least two oxidation states M^{y} and M^{x}. The at least one redox couple M^{y}/M^{x} is suitable to be reduced from at least one oxidized state M^{y} to at least one reduced state M^{x} and to be oxidized from at least one reduced state M^{x} to at least one oxidized state M^{y} according to formula 2:

*M^{y}* + *pe⁻* ↔ *M^{x}* formula 2.

When the electrolytic media 3 comprises or consists in water, i.e. that the solvent of the electrolytic media 3 comprises or consists in water, the oxidation of dissolved gaseous dihydrogen 4 and the reduction of protons, taking place at the electrode 8, may involve water, hydronium ions and/or hydroxide ions generation and/or consumption depending on the pH of the aqueous electrolytic media 3.

Hence, according to the invention, the storage of gaseous dihydrogen is carried out by converting gaseous dihydrogen 4 into protons and electrons at the second electrode 8 and concomitantly stored these electrons through the reduced state M^{x} of the at least one couple M^{y}/M^{x} at the first electrode 7 by reducing the (or one of the) oxidized form M^{y} of the at least one redox couple M^{y}/M^{x} to its (or one of its) reduced form M^{x}. Thus, according to the invention, the gaseous dihydrogen is not stored into its gaseous form but in another form, that is, dissociated as protons and electron stored in a single tank (the sealed chamber 2), but respectively solubilized in the electrolytic media 3 and in the form of an insoluble reduced redox couple at the first electrode 7. In a further advantageous embodiment described below, the electrons and the protons can be further separated when the electrolytic media 3 is removed from the sealed chamber 2 and/or the at least one first electrode 7 is removed from the electrolytic media, after the electrons are stored in the at least one redox couple M^{y}/M^{x}. This provides a safest storage of dihydrogen compared to high pressure and/or liquid dihydrogen storage that is to be avoided close to dwellings and/or in urban or densely populated area. Moreover, small scale pressurization of gaseous dihydrogen, typically between 250 and 700 bars, and liquefaction of gaseous dihydrogen are expensive. Such costs are avoided according to the invention. The invention also enables long-term storage as in the optimized electrolytic media 3 the redox couple exhibits relatively slow reaction kinetics with the electrolytic media 3 and the electrode 7 and electrolytic media 3 can be reversibly separated.

Moreover, the first electrode 7 and/or the at least one redox couple M^{y}/M^{x} and/or the electrolytic media 3 will be chosen to limit spontaneous oxidation of the reduced form M^{x} of the at least one redox couple M^{y}/M^{x}. In this storage step, depending on the redox potential E(M^{y}/M^{x}) of the at least one couple M^{y}/M^{x}, energy is provided to or recovered from the device 1 through current injection at a defined potential between electrode 7 and electrode 8.

The gaseous dihydrogen 4 is recovered by converting the reduced state M^{x} of the at least one couple M^{y}/M^{x} into the oxidized state M^{y} of the at least one couple M^{y}/M^{x} and electrons. Concomitantly, gaseous dihydrogen 4 is generated at the at least one second electrode 8 by reducing protons. In this recovering step, depending on the redox potential E(M^{y}/M^{x}) of the at least one couple M^{y}/M^{x}, energy is provided or recovered to the device 1 through current injection between electrode 7 and electrode 8 at a defined potential. Thus, according to the invention, the gaseous dihydrogen 4 can be released instantaneously according to the needs.

The device 1 is arranged so that the absolute potential difference |ΔE| between the redox potential E(M^{y}/M^{x}) of the at least one couple M^{y}/M^{x} and the redox potential E(H⁺/H₂) of the couple H⁺/H₂, for a predetermined electrolytic media 3 and a predetermined pressure range of gaseous dihydrogen 4, is lower than or equal to 0.6 V. In batteries, the potential difference between the redox potential of the redox couple at the anode and the redox potential of the redox couple at the cathode has to be as high as possible. The battery requires a high potential difference in order to function; typically, higher than 1 Volts. Thus, contrary to batteries, according to the invention, |ΔE| is as low as possible. Decreasing |ΔE| allows decreasing the energy needed to store or release the gaseous dihydrogen and, thus, increase the efficiency of the device 1. Moreover, the charging/discharging rates (C-rate) in the device 1 are low compared to common charging/discharging rates in batteries for energy storage. Typically, rate of charging/discharging is comprised between 0.05 and 0.001C in the device 1 whereas charging/discharging rates comprised between 0.1 and 5C in batteries. The current densities in the device are low compared to fuel cells or electrolyzers for water splitting. Typically, current densities comprised between 0.5 and 100 mA/cm2 are used in device 1, whereas current densities are comprised between 100 and 2000 mA/cm² in fuel cell or electrolyzers for water splitting. Moreover, oxygen is neither introduced nor produced by the device.

The device 1 further comprises connection means 5 suitable for connecting the seal chamber 2 to an external gas circuit 6.

The device 1 further comprises two current collectors 10 respectively connected to the at least one anode 7 and the at least one cathode 8. The two current collectors 10 forms and/or are connected to two respective connectors 13, located outside the sealed chamber 4, intended to be connected to the current generator 11.

In an advantageous embodiment, when the hydrogen is stored through or in the reduced state M^{x} of the at least one redox couple M^{y}/M^{x} and when the electrolytic media 3 is a liquid, the device 1 further comprises means 14 arranged to remove the electrolytic media 3 from the sealed chamber 2 and/or the at least one first electrode 7 is arranged to be removed from the electrolytic media the sealed chamber 2. This absence of contact between the electrolytic media 3 and the at least one first electrode 7 allows to further prevent spontaneous reaction of the reduced state M^{x} of the at least one redox couple M^{y}/M^{x} with the electrolytic media 3. The at least one first electrode 7 is also arranged to be reintroduced in the electrolytic media into the sealed chamber 2 and the means 14 are also arranged to reintroduce the electrolytic media 3 within the sealed chamber 3 when dihydrogen need to be released from the device 1. As non-limiting description, the means 14 comprises supply means, a pump for instance, connection means suitable to connect the sealed chamber to a liquid circuit and a liquid tank to store, temporarily, the electrolytic media 3. In the absence of electrolyte, the sealed chamber 2 is kept filled with dihydrogen within the predetermined pressure range, preferably at a gauge pressure comprised between 2.10³ and 5.10⁶ Pascals, preferably 1.10⁶ Pascals.

In case of long-term storage of the hydrogen through the reduced state M^{x} of the at least one redox couple M^{y}/M^{x}, it is proposed an alternative to the embodiment described above. In order to further prevent spontaneous reaction of the reduced state M^{x} of the at least one redox couple M^{y}/M^{x} with gaseous dioxygen, the supplying means 9 may further be arranged to inject an inert gas in or remove the inert gas from, through the gas circuit 6, the seal chamber 3. After the electrolytic media 3 has been removed from the sealed chamber 3 by the means 14, the inert gas is injected within the sealed chamber until a gauge pressure of inert gas within the sealed chamber 3 is comprises between 2.10³ and 5.10⁶ Pascals, preferably 1.10⁶ Pascals. This feature allows avoiding gaseous dihydrogen diffusion within the sealed chamber 3. When dihydrogen release is needed, the inert gas is removed by the supply means 9, then the electrolytic media 3 is reintroduced within the sealed chamber 3, so the electrolytic media 3 is put back in contact with the electrodes 7, 8, to enable dihydrogen release from the device 1. Inert gas may be provided by external means or stored in a further tank 15 connected to supply means 9.

As a non-limiting example, gaseous dihydrogen 4 feeding the sealed chamber 2 may be produced by a nearby water splitting electrolyzer supplied by renewable energies (photovoltaic panel or wind turbines). Advantageously, the gaseous dihydrogen 4 produces by electrolysis may be temporarily stored in a gas tank 12 prior to be injected in the sealed chamber 2.

A calculation, based on several metallic elements and organic molecules used as redox couple M^{y}/M^{x}, showed that the rough total energy needed for storing and releasing 37.3 grams (gr) gaseous dihydrogen according to the invention is comprised between 50 and 250 Wh, depending on the redox couple M^{y}/M^{x}, that is between 10 and 45% of the available energy stored in the device 1. To store 1000 kWh, the volume of the sealed chamber 2 will be around 2 m³ whereas the volume to store the same amount of energy in a rack of bottle with 300 bar compressed hydrogen or with lithium batteries is around 8 m³.

As known by the skilled person, the redox potential of a redox couple may vary according to the pH, the temperature and the pressure of the gas in equilibrium with the electrolytic media with which the redox couple is in contact and/or in which the redox couple is immersed.

For instance, the redox potential E(H⁺/H₂) of the redox couple H⁺/H₂ varies from 0 Volts versus standard hydrogen electrode (SHE) at pH=0 to -0.83Volts versus SHE at pH=14.

Preferably, the at least one couple M^{y}/M^{x} will be chosen so that the redox potential E(M^{y}/M^{x}) of the at least one couple M^{y}/M^{x} is as close as possible to 0 Volts versus reversible hydrogen electrode (RHE). In other words, this potential must be close to 0 Volts versus SHE at pH = 0 or close to -0.83 V vs SHE at pH = 14.

As non-limiting example, in a preferred embodiment, the electrolytic media 3 is an aqueous electrolytic solution 3. In that case, the redox reactions taking place at the second electrode 8 may be written either according to formula 1 when the aqueous electrolytic solution 3 is at pH neutral or acidic or according to the following formula 3 when the aqueous electrolytic solution 3 is at pH neutral or basic:

*H*₂ (*gas*) + 2*OH⁻* (*liq*) ↔ 2*H*₂*O*(*liq*) + 2*e*⁻, formula 3.

Hence, the aqueous electrolytic solution 3 is preferably:
- high pH, typically higher than or equal to 10, more preferably to 11, even more preferably to 12, most preferably to 13 and even most preferably to 14, or
- low pH, typically lower than or equal to 4, more preferably to 3, even more preferably to 2, most preferably to 1 and even most preferably to 0, and/or
- buffered, that is:
   ▪ with high concentrations, typically higher than or equal to 1 mol/L, more preferably to 1.25, even more preferably to 1.5, most preferably to 1.75, even most preferably to 2, particularly advantageously to 2.25, more particularly advantageously to 2.5, even more particularly advantageously to 2.75 and in a particularly preferred manner to 3 mol/L, of an acid, for instance an hydrohalic acid, sulfuric acid or nitric acid, or of a base, for instance potassium hydroxide or Sodium hydroxide, or
   ▪ a buffered solution comprising a weak acid, or respectively a weak base, and its conjugated base, or respectively its conjugated acid.

According to the invention, it is also described a method for electrochemical reversible dihydrogen storage in the device 1 according to the invention. The method comprises the step of storing gaseous dihydrogen 4 in the device 1. The storing step consisting in supplying gaseous dihydrogen 4, by supply means 9, comprising a pump 9 for instance, until the pressure of gaseous dihydrogen within the sealed chamber 2 reaches a predetermined pressure range or value. Gaseous dihydrogen 4 is injected inside the sealed chamber 2 through the connection means 5. The gaseous dihydrogen 4 may be coming from an electrolyzer for water splitting or a gas tank 12. The storing step further comprises reducing from an oxidized state M^{y} to a reduced state M^{x} the at least one redox couple M^{y}/M^{x} by injecting a current, by the current generator 11, through the at least one first electrode 7 and oxidizing dissolved gaseous dihydrogen 4 to form protons at the least one second electrode 8.

The method further comprises a step of releasing gaseous dihydrogen 4 from the device 1. The releasing step consisting in oxidizing from a reduced state M^{x} to an oxidized state M^{y} the at least one redox couple M^{y}/M^{x} at the first electrode 7 and reducing protons, by injecting a current through the at least second electrode 8, to form gaseous dihydrogen 4 at the at least one second electrode 8. The releasing step further comprises venting the gaseous dihydrogen 4 out of the sealed chamber 2 through the connection means 5.

The method further comprises the step consisting in monitoring and/or controlling, by means for monitoring and/or controlling the pressure of gaseous dihydrogen 4 within the sealed chamber 2, the gaseous dihydrogen 4 pressure. Typically, the gaseous dihydrogen 4 gauge pressure will be comprised between 2.10³ and 5.10⁶ Pascals, preferably 1.10⁶ Pascals, at ambient temperature.

In a first embodiment, and in reference to FIGURE 2 to 7, it is introduced results obtained from the device 1 comprising one first electrode 7 and one second electrode 8. The device 1 comprises one redox couples M^{y}/M^{x} consisting in Iron as chemical element. Iron has been chosen because it is low cost and found in abundant amount. The redox couple M^{y}/M^{x} involved in the gaseous dihydrogen storage according to the embodiment are Fe _{(solid)}/Fe (OH)_{2 (solid)}. The first electrode 7 is made of a graphite rod coated by carbonyl iron particles with iron content higher than 97% sold by Sigma-Aldrich^{®}. The graphite rod coated by carbonyl iron particles is impregnated by paraffin. Paraffin is used here to exclude gaseous oxygen traces. Indeed, the method for reversibly storing dihydrogen is implemented in the complete absence of gaseous oxygen and oxygen is not produced during dihydrogen storage. The graphite rod is rubbed against a paper on which particles of the materials to be tested have been deposited. This effectively immobilizes the particles on the graphite surface. According to the first embodiment, the device has been arranged for electrochemical study purpose. The first electrode 7 is positioned at the interface between the electrolytic media 3 and the dihydrogen atmosphere 4 so that only a small surface of the first electrode 7 (few mm²) is immerged in the electrolytic media 3. Hence, the device 1 according to the first embodiment is not arranged to maximize the dihydrogen storage capacity. The second electrode 8 is made of a 2cmx2cm piece of graphite felt coated with Platinum (Pt) nanoparticles. Pt nanoparticles deposition is carried out in a solution containing 0.1M KCI and 1 mM K₂PtCl₆ by cycling the potential of the graphite felt from 0 to -1 V versus Ag/AgCl at 20 mV/s for 30 cycles. After washing with distilled water and drying, the second electrode 8 obtained is very efficient for conversion of Hz to protons and protons to Hz at the low experimental current range. The second electrode 8 in the presence of Hz was used as reversible hydrogen electrode (RHE). All potentials measured at the first electrode 7 are given vs RHE.

In reference to Figures 2A, it is shown a cyclic voltamperogram measured with carbonyl iron in KOH 1M under dihydrogen atmosphere. Several peaks are observed. Each of the peaks corresponds to a different electrochemical reaction; for instance:
- Fe + 2OH⁻ → [Fe(OH)]ads,
- Fe + 2OH⁻ → Fe(OH)₂ + 2e⁻,
- Fe(OH)₂ + OH⁻ → FeOOH + H₂O + e⁻,
- 3Fe(OH)₂ + OH⁻ → Fe₃O₄.4H₂O + 2e⁻,
- FeOOH + H₂O + e⁻ → Fe(OH)₂ + OH⁻,
- Fe₃O₄.4H₂0 +2e⁻ → 3Fe(OH)₂ + 2OH⁻,
- Fe(OH)₂ + 2e⁻ → Fe,
- 2H₂0 + 2e⁻ → H₂ + 2OH⁻.

Despite slight differences in peak positions or relative peak intensities, quite similar electrochemical signals can be observed with other type of iron such as Fe₃O₄ (99.997 % metal basis purity, Puratronic, Alfa) in KOH 1M under dihydrogen atmosphere as illustrated in FIGURE 2B.

FIGURE 2C illustrates result obtained with carbonyl iron in KOH 25% as electrolytic media under dihydrogen atmosphere. Relative intensity of the different redox signal or their exact position is slightly changed when conditions are changed.

FIGURE 2D illustrates result obtained with carbonyl iron in KOH 25% as electrolytic media and with Na₂S additive introduced as additive in the electrolytic media under dihydrogen atmosphere. Given that sulphur species adsorb on the surface of the metal, it prevents hydrogen evolution reaction in the given potential range.

FIGURE 3 illustrates Coulombic efficiency of the device 1 for 100 charge/discharge cycles. A coulombic efficiency between 90 and 100 % has been obtained. Charge/discharge cycle according to the invention is not to be read as a charge/discharge cycle for a battery. According to the invention, the efficiency of the charge/discharge cycle, which can be assessed by the Coulombic efficiency, shows or characterizes the reversibility and/or the efficiency of the dihydrogen storage/release. The charge corresponds to the step of dihydrogen storage during the reduction of the oxidized state M^{y} of the redox couple M^{y}/M^{x}, while discharge corresponds to the step of release of dihydrogen during the oxidation of the reduced state M^{x} of the redox couple M^{y}/M^{x}.

To demonstrate that other element/compound may be used as redox couple M^{y}/M^{x}, it is illustrated in FIGURE 4A a cyclic voltamperogram obtained with Bismuth particles (100 mesh, 99% trace metals basis, from Sigma-Aldrich) in KOH 1M under dihydrogen atmosphere. One can observed two well defined peaks, one for oxidation at about 0.55 V and one for reduction at about 0.2 V.

In reference to FIGURE 4B, it is illustrated gaseous dihydrogen storage through metal hydride formation using Lanthanum pentanickel (LaNis, hydrogenstorage grade from Sigma-Aldrich), and indeed, in the conditions of the experiment (KOH 1M, H₂ atmosphere) reversible signal of oxidoreduction is observed centered around 0 Volts versus RHE.

The use of Antimony (powder from Fluka) and Zinc (powder from bioMérieux SA) as redox couple M^{y}/M^{x} is also illustrated respectively in FIGURE 5A and FIGURE 5B. Reactivity suitable for dihydrogen storage is observed. In the electrolytic media 3 used, i.e. KOH 1M under Hz atmosphere, the stability of the redox reaction was limited compared to other compounds such as carbonyl iron or bismuth, for example. Composition of the electrolytic media 3 can be changed to better control the reaction of the metal interface.

The use of insoluble organic molecules or polymers as redox couple M^{y}/M^{x} is illustrated in FIGURE 5C. The first electrode 7 consists in anthraquinones (99% purity from Fluka) adsorbed on Ketjen black particles (EC-300J form FuelCellStore). As it can be observed, a well-defined reversible electrochemical reaction is observed at 0.23 V vs RHE.

FIGURE 6 illustrates Coulombic efficiency of the device 1 for 100 charge/discharge cycles using Bismuth as redox couple M^{y}/M^{x}. Bismuth shows well-defined charge-discharge processes. The cycles are centered between 0.25 and 0.5 Volts and the coulombic efficiency was found around 80 to 100 %.

FIGURES 7A, 7B and 7C respectively illustrate Antimony, LaNi₅ and Anthraquinone charge/discharge cycle experiments. Each system has its own redox potential domain: Anthraquinone is around 0.25 Volts, LaNis is around 0 Volts and Antimony is around 0.1-0.2 Volts.

According to results show in the first embodiment, one can observe that the difference of potential between the potential of charge and the potential of discharge can be lowered down to about 0.100 V. Considering that 1000 Amperehour (Ah) allows to store 37.3 grams (gr) of dihydrogen that represents approximately 560 Watt-hour (Wh) of available energy (here we consider the widely accepted value of 15 kWh per kg of H₂). The whole cycle of storing and releasing Hz would require 100 Wh, so less than 20 % of the total available energy. This has to be compared to the energy needed for pressurizing hydrogen (7% at 200 bars, 15% at 700 bars) or liquefaction (35% at industrial scale or higher at smaller scale). The conversion to ammonia represents 15 to 30 % of the initial energy, 35 to 40 % for liquid organic hydrogen carriers. Moreover, these energy cost estimations are usually considered for large scale industrial facilities.

In a second embodiment, and in reference to FIGURES 8 and 9, it is introduced results obtained from the device 1 comprising one first electrode 7 and one second electrode 8. The device 1 comprises one redox couples M^{y}/M^{x} consisting in Iron as chemical element. The redox couple M^{y}/M^{x} involved in the gaseous dihydrogen storage according to the embodiment are Fe_{(solid)}/Fe(OH)_{2 (solid)}. The first electrode 7 is made of stainless steel mesh coated by carbonyl iron particles. The electrode is obtained by mixing 1 gr of carbonyl iron particles with iron content higher than 97% sold by Sigma-Aldrich^{®} and 70 mgr of polyethylene with an average molecular weight around 4000 sold by Sigma^{®}. The mixture is then applied by pressing it on a 316L stainless mesh at 140°C. The working surface (or immerged surface) of the first electrode 7 is around 1 cm². The second electrode 8 is a platinum mesh (6 cm x 4 cm) connected to a 1 mm diameter platinum wire. A third electrode, a Hg/HgO (1 M KOH) reference electrode, was used to control the potential of the first electrode 7. Contrary to the first embodiment, no gaseous dihydrogen is injected in the sealed chamber 2. The sealed chamber 2 was under inert atmosphere with a continuous flow of N₂. The gas leaving the sealed chamber 2 was continuously analysed with an online H₂ sensor arranged to measure the gaseous dihydrogen released, from the first electrode 7, in the sealed chamber 2. The aqueous electrolytic solution 3 is made of KOH 1M, or KOH 25%, in volume, with or without the additive Na₂S 0.01 M, in water.

According to the second embodiment, a higher amount of redox couples M^{y}/M^{x} was used in order to demonstrate the release of hydrogen on-demand. Unlike the first embodiment in which only a small surface of the first electrode 7 was immerged in the electrolytic media 3, a significant active surface of the first electrode 7 is immerged in the electrolytic media 3 in the second embodiment. Hence, the device 1 according to the second embodiment is arranged to exhibit enhanced dihydrogen storage capacity.

FIGURE 8A shows the cyclic voltamperogram the device 1 at 0.1 mV/s. The typical redox signals observed in FIGURE 2A with lower amount of redox couples M^{y}/M^{x} are also observed in FIGURE 8A. From the values measured by voltammetry, the values of current monitored over time are illustrated FIGURE 8B. The current is periodically increasing and decreasing with time while the potential is varying from -1.15 to -0.7 V vs Hg/HgO. When current is higher than 0 A, dihydrogen should be released and when the current is lower than 0 A, dihydrogen should be stored. And indeed, hydrogen is periodically detected when the current is higher than 0 A. FIGURE 8C shows the response of the gaseous dihydrogen sensor which is proportional to the gaseous dihydrogen quantity released by the device 1 over time.

The controlled release of dihydrogen is even more visible when stepped current is imposed for a known period of time as illustrated in FIGURE 9. Dihydrogen is detected when carbonyl iron is oxidized with a current of 10 mA. The sensor response is then decreasing rapidly when the oxidation is stopped.

When the electrolytic media 3 was separated from the electrodes in the sealed chamber, and the dihydrogen atmosphere was introduced, electrode 7 was found stable for at least 6 months, without visual trace of corrosion. This result shows that device when operated properly, in the optimal conditions, can provide the required stability for seasonal storage, i.e. for several months.

The invention is not restricted to embodiments described above and numerous adjustments may be made within the scope of the invention.

Thus, in combinable alternatives of previous embodiments:
- the at least one redox couple M^{Y}/M^{x} consists in metal such as Antimony, Copper, Lead, Zinc, Tungsten or Cadmium, and/or a metal hydride such as LaNi₅ and/or an insoluble organic molecule such as Anthraquinone or an insoluble redox polymer such as Polyaniline, and/or
- the electrolytic media 3 comprises a protic media, and/or
- the electrolytic media 3 comprises water and/or is a mixture of water and an organic media, and/or
- the electrolytic media 3 does not comprise water, the redox potential of the at least one redox couple M^{y}/M^{x} is higher than the reduction potential of the electrolytic media and lower than the oxidation potential of the electrolytic media, and/or
- the electrolytic media comprises water, the redox potential of the at least one redox couple M^{y}/M^{x} is lower than the oxidation potential of water and higher, equal or lower than the reduction potential of water, and/or
- the electrolytic solution 3 comprises one or more additives to limit or inhibit spontaneous reaction of:
   ▪ the at least one redox couple M^{Y}/M^{x} with the electrolytic aqueous solution 3, and/or
   ▪ the gaseous dihydrogen 4 with the at least one redox couple M^{y}/M^{x}.

## Claims

1. Device for electrochemical reversible dihydrogen storage (1), said device comprising:
- a sealed chamber (2) intended to receive an electrolytic media (3) and gaseous dihydrogen (4),
- connection means (5) suitable for connecting the seal chamber to a gas circuit (6),
- at least one first electrode (7), and at least one second electrode (8), arranged within the sealed chamber;
the at least one second electrode is suitable to oxidize dissolved gaseous dihydrogen, in the electrolytic media, and form protons and to reduce protons and form gaseous dihydrogen according to formula 1:
*H*₂ ↔ 2*H⁺* + 2*e*⁻, formula 1;
the at least one first electrode comprises at least one redox couple M^{y}/M^{x}, insoluble in the electrolytic media, said at least one redox couple being arranged to exhibit at least two oxidation states and being suitable to be reduced from an oxidized state M^{y} to a reduced state M^{x}, and conversely, according to formula 2:
*M^{y} + pe⁻* ↔ *M^{x}* , formula 2, wherein x and y are oxidation number;
an absolute potential difference |ΔE| between a redox potential of the couple H⁺/H₂, for a predetermined electrolytic media and a predetermined pressure range of gaseous dihydrogen, and a redox potential of the at least one couple M^{y}/M^{x} is lower than or equal to 0.6 V.

2. Device (1) according to claim 1, wherein the electrolytic media (3) comprises a protic media.

3. Device (1) according to claim 1 or 2, wherein the electrolytic media (3) comprises water.

4. Device (1) according to claim 1 or 2, wherein the electrolytic media (3):
- is different from water; the redox potential of the at least one redox couple M^{y}/M^{x} is higher than the reduction potential of the electrolytic media and lower than the oxidation potential of the electrolytic media, or
- comprises water; the redox potential of the at least one redox couple M^{y}/M^{x} is lower than the oxidation potential of water and is higher, equal or lower than the reduction potential of water.

5. Device according to any of the preceding claims, wherein the electrolytic media (3) comprises one or more additives to limit or inhibit spontaneous reaction of:
- the at least one redox couple M^{y}/M^{x} with the electrolytic media, and/or
- the gaseous dihydrogen with the at least one redox couple M^{y}/M^{x}.

6. Device (1) according to any of the preceding claims, wherein the electrolytic media (3) intended to be received in the sealed chamber (2) is a liquid and:
- the device comprises means (14) arranged to remove and reintroduce the electrolytic media into the sealed chamber, and/or
- the at least one first electrode (7) is arranged to be removed from and to be reintroduced into the electrolyte within the sealed chamber.

7. Device (1) according to the any of the preceding claims, wherein the at least one redox couple M^{y}/M^{x} comprises a metal such as Iron, Zinc, Tungsten, Cadmium, Copper, Bismuth, Antimony, Lead, a Metal hydride such as LaNis, an organic molecule such as Anthraquinone and/or an redox polymer such as Polyaniline.

8. Device (1) according to any of the preceding claims, wherein the at least one second electrode (8) comprises a catalyst or a combination of catalysts suitable to oxidize dissolved gaseous dihydrogen, in the electrolytic media (3), and form protons and to reduce protons and form gaseous dihydrogen according to formula 1.

9. Device (1) according to any of the preceding claims, further comprising supply means (9) arranged to inject gaseous dihydrogen (4) in or remove gaseous dihydrogen from, through the gas circuit (6), the seal chamber (2) so that the pressure of gaseous dihydrogen within the sealed chamber is maintained in the predetermined pressure range.

10. Device (1) according to any of the preceding claims, further comprising two current collectors (10) respectively connected to the at least one first electrode (7) and the at least one second electrode (8).

11. Device (1) according to any of the preceding claim, further comprising a current generator (11) arranged for circulating a current between the at least one first electrode (7) and the at least one second electrode (8).

12. Device (1) according to any of the preceding claim, further comprising means for monitoring and/or controlling the pressure of gaseous dihydrogen (4) within the sealed chamber (2).

13. Method for electrochemical reversible dihydrogen storage in the device (1) according to any of claims 1 to 12, said method comprising the step of storing gaseous dihydrogen (4) in said device, said storing step consisting in:
- supplying gaseous dihydrogen, by supply means (9), until it reaches a predetermined pressure range, in a sealed chamber (2) of the device, said device comprises at least one second electrode (8) and at least one first electrode (7) and comprises an electrolytic media (3); gaseous dihydrogen being injected through connection means (5) of the sealed chamber connecting the seal chamber to a gas circuit (6),
- reducing from an oxidized state M^{y} to a reduced state M^{x} of at least one redox couple M^{y}/M^{x}, insoluble in electrolytic media of the at least one first electrode (7) by injecting a current, by a current generator (11), through the at least one first electrode (7) and oxidizing dissolved gaseous dihydrogen to form protons at the least one second electrode (8);
an absolute potential difference |ΔE| between a redox potential of the couple H⁺/H₂, for a predetermined electrolytic media and a predetermined pressure range of gaseous dihydrogen, and a redox potential of the at least one couple M^{y}/M^{x} is lower than or equal to 0.6 V.

14. Method according to claim 13, further comprising a step of releasing gaseous dihydrogen (4) from the device (1), said releasing step consisting in:
- oxidizing from a reduced state M^{x} to an oxidized state M^{y} the at least one redox couple M^{y}/M^{x} at the at least one first electrode (7) and reducing protons, by injecting a current through the at least one second electrode (8), to form gaseous dihydrogen at the least one second electrode,
- venting the gaseous dihydrogen out of the sealed chamber (2) through the connection means (5).

15. Method according to claim 13 or 14, further comprising the step consisting in monitoring and/or controlling, by means for monitoring and/or controlling the pressure of gaseous dihydrogen (4) within the sealed chamber (2), the gaseous dihydrogen pressure at a gauge pressure lower or equal to 1.10⁶ Pascals at ambient temperature.
